# EUROPEAN PATENT APPLICATION

(11) **EP 3 376 042 A1**
(43) Date of publication of application: **19.09.2018**
(21) Application number: 17160500.9
(22) Date of filing: 13.03.2017
(51) Int. Cl.: F04D 25/06, F04D 29/62, F04D 13/02, F04D 13/06, F04D 15/00, H02K 11/35, H02K 5/22

(54) **MOUNTING SYSTEM FOR MOUNTING A MONITORING UNIT ON A PUMP**

(71) Applicant: Grundfos Holding A/S, 8850 Bjerringbro (DK)
(72) Inventor: Mikkelsen, Steen, 8850 Bjerringbro (DK)
(74) Representative: Patentanwälte Vollmann & Hemmer

(57) **Abstract**

The present disclosure provides a mounting system (33) for mounting a monitoring unit (29) on a pump unit (1) for monitoring at least one operational parameter of the pump unit (1), wherein said mounting system (33) comprises a housing (31), an elongate member (37) and a bracket (39), wherein the housing (31) is configured to accommodate the monitoring unit (33), wherein the monitoring unit (29) is configured to receive at least one operational parameter from a pump sensor (21, 23), wherein the elongate member (37) comprises a first mounting portion (49) and a second mounting portion (51), wherein the bracket (39) is mounted on the first mounting portion (49) of the elongate member (37) for the bracket (39) to be coupled to the pump unit (1), wherein the housing (31) is mounted on the second mounting portion (51) of the elongate member (37) holding the housing (31) in a defined position distanced from the pump unit (1).

## Description

### TECHNICAL FIELD

The present disclosure relates generally to multistage or single-stage centrifugal pump assemblies with a monitoring unit for monitoring at least one operational parameter of a pump, and to mounting systems for mounting such a monitoring unit on a pump.

### BACKGROUND

It is beneficial to monitor operational parameters of a pump for maintenance, diagnosis or statistical purposes. In particular, multistage centrifugal pumps are often used for high pressure and/or high flow performance in industrial applications for which reliability is crucial. For instance, multistage centrifugal pumps may be used on off-shore wind energy plants. A reliable operation of the pumps is necessary to achieve a high operational efficiency of a wind energy plant. It is thus desired to know as soon as possible if an operational parameter of a pump indicates a failure already happened or a likely failure in the future. In both cases the operational efficiency of the plant may depend on how quickly an action for service, repair, or replacement can be triggered. So, quick information about the current operational parameters of a pump can be essential. For this purpose, known pumps comprise monitoring units in their main electronics housing for indicating operational parameters. It is also known to connect the pumps with a telecommunications network such that the operational parameters can be communicated via a telecommunications interface to a remote receiving station.

WO 2010/081694 describes a monitoring unit in form of a bespoke collar embracing a drive unit of the pump.

### SUMMARY

In contrast to such known pumps and monitoring units, embodiments of the present disclosure provide a mounting system for a pump monitoring unit allowing a mounting of one type of monitoring unit to a variety of pump sizes and types. Thereby, a variety of existing pumps without a monitoring unit can be easily and cost-efficiently equipped and "retro-fitted" with one type of monitoring unit by use of an embodiment of the present disclosure.

In accordance with a first aspect of the present disclosure, a mounting system for mounting a monitoring unit on a pump for monitoring at least one operational parameter of the pump is provided, wherein said mounting system comprises
- a housing for accommodating the monitoring unit, wherein the monitoring unit is configured to receive at least one operational parameter from a pump sensor,
- an elongate member and
- a bracket,
wherein the elongate member comprises a first mounting portion and a second mounting portion,
wherein the bracket is mounted on the first mounting portion of the elongate member for the bracket to be coupled to the pump,
wherein the housing is mounted on the second mounting portion of the elongate member holding the housing in a defined position distanced from the pump.

The bracket can be configured to be mounted to a standard fastener already comprised in a variety of pumps with different sizes. For instance, a multistage or single-stage centrifugal pump may comprise a peripheral flange connection between a motor housing and a casing, wherein the peripheral flange connection is axially fastened by standard nut-and-bolt fasteners. The bracket of the mounting system disclosed herein may be coupled to the pump by one of those nut-and-bolt fasteners. Alternatively or in addition, multistage or single-stage centrifugal pumps may comprise two installation sections for the pump to be installable in two alternative operating orientations: a vertical stand-up position, wherein the rotational axis of the motor is essentially vertical, and a horizontal lying position, wherein the rotational axis of the motor is essentially horizontal. Alternatively to using the flange fasteners of the pump for coupling the bracket, the bracket may be coupled to that installation section of the pump which is not used for the actual operating position. For instance, if the pump is installed in a vertical operating position, an unused lateral installation section for the horizontal lying position may be used for coupling the bracket of the mounting system disclosed herein. Vice versa, an unused axial installation section for the vertical stand-up position may be used for coupling the bracket of the mounting system disclosed herein if the pump is installed in a horizontal lying operating orientation.

The distance provided by the elongate member between the housing and the pump provides the necessary flexibility for the monitoring unit to be retro-fitted in a variety of positions relative to the pump which is often installed in a confined space like a windmill. The bracket allows for a versatile use of standard fasteners or existing installation sections of the pump for mounting the monitoring unit to the pump. Furthermore, the distance provided by the elongate member minimises a heat transfer from the pump to the electronics within the mounting unit.

Optionally, the housing may be manually rotatable around a longitudinal axis of the elongate member from a first rotational position to a second rotational position. Such a rotatable mounting provides another degree of freedom for the flexibility for the monitoring unit to be retro-fitted to the pump in confined spaces, such as a wing energy plant. The housing may be prevented from inadvertent rotation, for instance caused by vibrations, by a frictional contact to the elongate member or at least one latch. Alternatively or in addition, the housing may be fixed after manual rotation in the desired rotational position by a fastener like a bolt or screw.

Optionally, the bracket is mounted on the first mounting portion of the elongate member so that a longitudinal axis of the elongate member is parallel to a rotor axis of the pump. As multistage centrifugal pumps often have an elongate installation space envelope along the rotor axis of the pump, the extension of the overall installation space envelope of the pump including the mounted monitoring unit may be kept to a minimum or none if the elongate member is parallel to it. If a pump comprises a laterally protruding pump inlet or outlet flange at a lateral side along a pipe axis, it may be advantageous for the bracket to be mounted on the first mounting portion of the elongate member in such a way that it can be coupled to the pump at the lateral side where the pump inlet or outlet flange laterally protrudes. Thereby, the extension of the overall installation space envelope of the pump including the mounted monitoring unit may be kept to a minimum or none.

Optionally, the housing is waterproof to protect the monitoring unit and comprises at least one input port for receiving at least one operational parameter from a pump sensor. The distance provided by the elongate member between the housing and the pump allows for a simple waterproof shape of the housing without the need for bespoke adaptations to the individual pump it is supposed to be mounted on. The input port(s), for instance industry standard M12 coaxial cable connector(s), can protrude through sealed opening(s) in the housing. At least one of the input ports may be a wireless receiver such as an antenna, a transmission coil or a similar device for wireless communication with a pump sensor, e.g. a Bluetooth communication.

Optionally, the elongate member has a higher stiffness than the housing. For instance, the elongate member may comprise metal and the housing may comprise plastic. Thereby, the elongate member is stiff enough to withstand torque moments while the housing can be light, waterproof and cost-efficient.

Optionally, the bracket has a first mounting section and a second mounting section, wherein the first mounting section is coupled to the first mounting portion of the elongate member, wherein the second mounting section is to be coupled to the pump, wherein the first mounting section and the second mounting section are essentially parallel or essentially orthogonal to each other. In the first alternative of parallel mounting sections, the bracket may preferably be coupled to a flange fastener connecting a motor housing with a casing, because such a flange fastener extends parallel to the rotor axis of the motor. In the second alternative of orthogonal mounting sections, the bracket may preferably be coupled to a lateral installation section, because such a lateral installation section provides for fastening perpendicular to the rotor axis of the motor. Thus, in both of these alternatives, the bracket may ensure that the elongate member is aligned in parallel with the rotor axis.

Optionally, the first mounting portion of the elongate member is located at a first axial end of the elongate member, and the second mounting portion of the elongate member extends from the first mounting portion to a second axial end of the elongate member. This ensures a minimal installation space envelope of the mounting system while providing sufficient distance between the housing and the pump.

Optionally, a longitudinal axis of the elongate member is both parallel and offset with respect to a centre plane of the housing. A centre plane of the housing may be defined here as a symmetry plane of the smallest virtual box-shaped space envelope into which the housing fits. Thereby, the installing person has more flexibility for mounting the monitoring unit to the pump. It is also beneficial for installing the housing with the centre plane co-planar with the plane defined by the rotor axis and a pipe axis. The pipe axis may be defined by the centre axis of the pump inlet flange and/or pump outlet flange. Again, the extension of the overall installation space envelope of the pump including the mounted monitoring unit may be kept to a minimum by this.

Optionally, the elongate member is spring mounted on the bracket. Such a spring mounting can be advantageous to compensate production tolerances and to dampen the transfer of vibrations from the pump to the housing. Furthermore, the mounting system including a spring is more resilient against inadvertent loosening of bolts, screws or other connections.

Optionally, a longitudinal axis of the elongate member is essentially vertical. Preferably, the housing comprises a first opening and a second opening essentially arranged coaxially, preferably on on a vertical line, wherein the second mounting portion of the elongate member is inserted through the first opening and the second opening, wherein the housing is fixed in axial direction relative to the second mounting portion of the elongate member by an abutment face at an end of the second mounting portion of the elongate member, wherein the abutment face abuts axially against the second opening of the housing. The elongate member may be a rod, a shaft, or a pipe, preferably with a circular outer cross section, preferably tubular, preferably made of a metal like steel or aluminium. The first and second openings may be formed by housing lugs projecting from the housing. The abutment face may be formed by an annular face radially projecting at an end of the second mounting portion of the elongate member. Such an abutment face may be integral with the elongate member or defined by a head of a screw screwed into the axial face of the second mounting portion of the elongate member.

Optionally, the first and/or the second openings may comprise at least one radially inward projection for compensating production tolerances and ensuring a tight fit between the elongate member and the housing. The at least one radially inward projection may be resilient to a certain degree to be at least partially squeezed radially outward when the elongate member is inserted through the first opening and/or the second opening. The at least one radially inward projection may thus provide for a slightly smaller cross section of the first and/or the second opening that is flexible to adapt to the cross section of the second mounting portion of the elongate member within a tolerance range.

Optionally, the first opening is located near a first side of the housing and the second opening is located near a second side of the housing, wherein the first side and the second side are opposing sides of the housing. Thereby, the mounting system is more resistant to torque moments.

Optionally, the housing defines an inner volume for accommodating the monitoring unit, wherein the elongate member is located outside of the inner volume. An external mounting of the housing on the second mounting portion may not need any screwing into the plastic body of the housing, and thus facilitating a simple, reusable, durable and waterproof design of the housing. "External" may be defined here as the second mounting portion not protruding into the inner volume of the housing.

Optionally, the mounting system comprises an antenna confined inside the housing, wherein the antenna is connectable to the monitoring unit. Such an antenna may, for instance, be integrated into the housing. The antenna may be used for wireless communication between the monitoring unit and a remote receiver or sender. Such wireless communication may be unidirectional, bi-directional or multidirectional and may include information containing pump parameters, alerts, warnings, commands, instructions, updates, time, identifier, or other. Alternatively, the monitoring unit may comprise output ports for wired communication with an external device. For instance, the input ports may selectively be used as output ports.

In accordance with a second aspect of the present disclosure, a pump assembly is provided comprising a
- a pump unit,
- a monitoring unit,
- at least one pump sensor, and
- a mounting system as described above, wherein the monitoring unit is configured to receive at least one operational parameter from the at least one pump sensor,
wherein the bracket of the mounting system is coupled to the pump unit, and wherein the monitoring unit is located in the housing of the mounting system.

Optionally, the pump unit is a multistage centrifugal pump with a vertical or horizontal rotor axis. The mounting system as described above is most useful in combination with a multistage centrifugal pump, because multistage centrifugal pumps are often used for high pressure and/or high flow performance in industrial applications for which reliability is crucial. However, the mounting system disclosed herein may also be used for mounting a monitoring unit to a single-stage centrifugal pump.

Optionally, the pump assembly comprises an antenna connected to the monitoring unit, wherein the antenna is confined within the housing of the mounting system. The antenna may either be part of the monitoring unit or of the housing, or both. Preferably, the antenna is located at the outer periphery of the monitoring unit fully confined within the housing. Alternatively, the antenna may be placed on the outside of the housing.

### SUMMARY OF THE DRAWINGS

Embodiments of the present disclosure will now be described by way of example with reference to the following figures of which:
Fig. 1 shows a first perspective view on a first example of a multistage centrifugal pump assembly according to this disclosure;
Fig. 2 shows a second perspective view on the first example of a multistage centrifugal pump assembly according to this disclosure;
Fig. 3 shows a partially exploded perspective view on the first example of a multistage centrifugal pump according to this disclosure;
Fig. 4 shows a perspective view on a second example of a multistage centrifugal pump assembly according to a second embodiment of this disclosure;
Fig. 5a shows a first perspective view on a mounting system according to a first embodiment of this disclosure;
Fig. 5b shows a second perspective view on a mounting system according to a first embodiment of this disclosure;
Fig. 6a shows a first perspective view on a mounting system according to a second embodiment of this disclosure;
Fig. 6b shows a second perspective view on a mounting system according to a second embodiment of this disclosure; and
Fig. 7 shows an exploded view on a mounting system according to a second embodiment of this disclosure.

### DETAILED DESCRIPTION

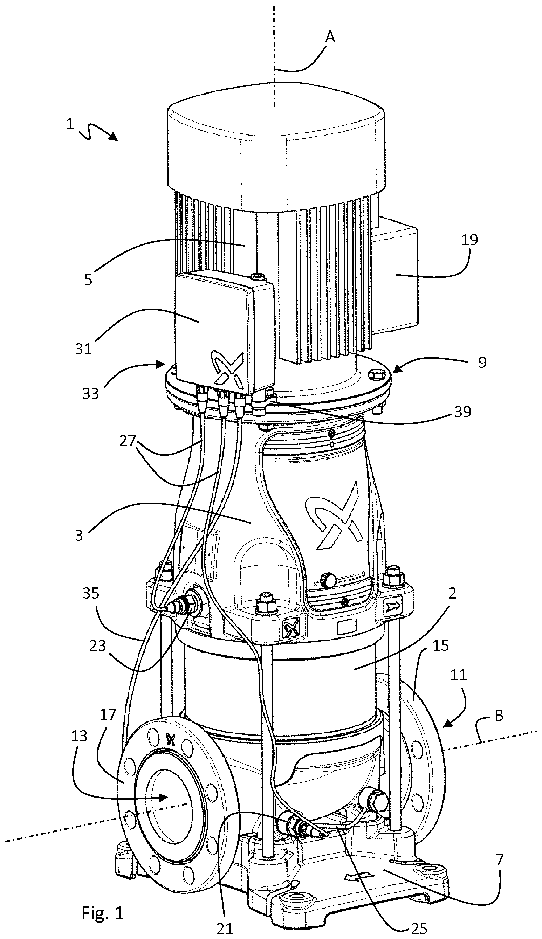

Fig. 1 shows a pump assembly with a pump unit 1 in form of a multistage centrifugal pump in a vertical stand-up position. A rotor axis A runs essentially vertically. The pump unit 1 comprises an impeller housing 2, a casing 3 and a motor housing 5. The impeller housing 2 extends from a bottom stand 7 vertically to the casing 3 connecting the impeller housing 2 with the motor housing 5. The motor housing 5 is connected to the casing 3 by a flange connection 9. The impeller housing 2 comprises at its bottom end an inlet port 11 and an outlet port 13. The inlet port 11 and the outlet port 13 are arranged coaxially along a pipe axis B. The inlet port 11 is surrounded by an inlet port connector flange 15 configured to be connected to a pipe (not shown). Analogously, the outlet port 13 is surrounded by an outlet port connector flange 17 configured to be connected to a pipe (not shown). The pump unit 1 is configured to convey fluid from the inlet port 11 to the outlet port 13 and/or to achieve a pressure differential between the inlet port 11 and the outlet port 13, wherein a fluid pressure at the outlet port 13 is higher than a fluid pressure at the inlet port 11. The inlet port 11 and the outlet port 13 are located at opposing lateral sides of the pump unit 1 so that the pipe axis B is horizontal and thus perpendicular to the vertical rotor axis A. A motor within the motor housing 5 is configured to drive a transmission axle (not shown) within the impeller housing 2 for driving a stack of impellers within the impeller housing 2 around the rotor axis A. An electronics housing 19 comprises a control unit for controlling the operation of the pump unit 1. Alternatively or in addition, the control unit may fully or partly be located within the motor housing 5.

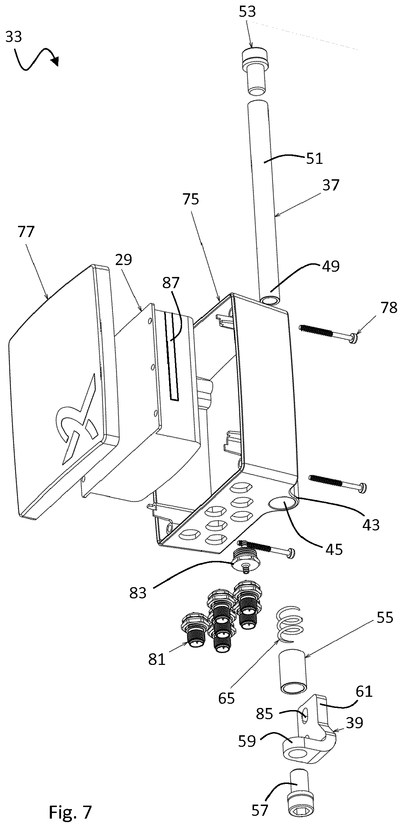

In order to monitor operational parameters of the pump unit 1, the pump unit 1 comprises a pressure differential sensor 21 and an ultrasound sensor 23. Alternatively or in addition, there could be a temperature sensor, a flow sensor, a speed sensor or any appropriate sensor for determining an operational parameter of interest. In the shown example, the pressure differential sensor 21 is located near the outlet port 13 and is connected via a pressure differential pipe 25 with the inlet port 11 for measuring the pressure differential between the inlet port 11 and the outlet port 13. The ultrasound sensor 23 is placed at a lower portion of the casing 3 for determining whether the impellers are fully immersed in fluid. The ultrasound sensor 23 is thus used as a warning sensor to prevent the pump unit 1 from running dry. Those sensors 23, 25 are connected by cables 27 with a monitoring unit 29 (see Fig. 7) located in a housing 31 of a mounting system 33 used for mounting the monitoring unit 29 to the pump unit 1. The cables 27 are preferably coaxial cables to shield the signal transmission between the sensors 21, 23 and the monitoring unit 29. The monitoring unit 29 is powered via a power cable 35.

The monitoring unit 29 receives signals from the sensors 21, 23 and processes the received information for further wireless communication of operational parameters of the pump unit 1 to an external receiving station (not shown). The monitoring unit 29 is thus connected to an antenna 87 (see Fig. 7) for wireless transmission.

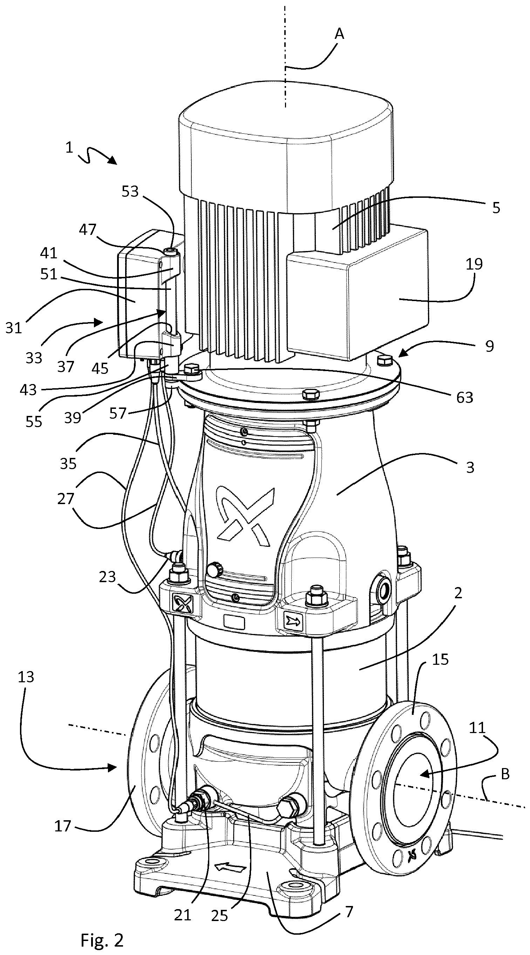

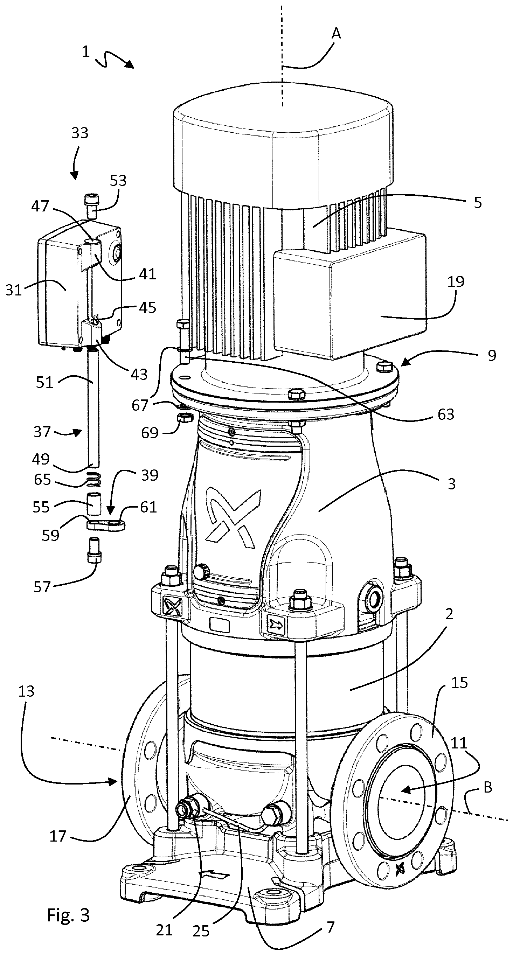

Fig. 2 gives a better view on how the mounting system 33 is coupled to the pump unit 1. The mounting system 33 comprises the housing 31, an elongate member 37 and a bracket 39. The elongate member 37 runs essentially vertical parallel to the rotor axis A through two housing lugs 41, 43 projecting from a backside of the housing 31. The upper one of the lugs 41 is located near the top of the housing 31 and the lower one of the lugs 43 is located near a bottom side of the housing 31. The lower lug 43 defines a first opening 45 and the upper lug 41 defines a second opening 47, wherein the first opening 45 and the second opening 47 are coaxially aligned to receive the elongate member 37 being inserted through the first opening 45 and the second opening 47. The elongate member 37 comprises a first mounting portion 49 (see Fig. 3) at its bottom end and a second mounting portion 51 extending from the first mounting portion 49 through the lugs 41, 43 to a top end of the elongate member 37. At the top end of the second mounting portion 51 of the elongate member 37 there is a screw 53 abutting with its head against the upper housing lug 41. At the bottom side, the housing 31 sits on a spacer sleeve 55 with its lower lug 43. The first mounting portion 49 of the elongate member 37 is connected to the flange connection 9 between the motor housing 5 and the casing 3 by the bracket 39. In this example, the first mounting portion 49 of the elongate member 37 is a bottom end portion, however, it will be readily understood that the first mounting portion 49 of the elongate member 37 could be a top end portion or an intermediary portion of the elongate member 37. A bottom screw 57, which could be the same as or similar to top screw 53, is used to connect the first mounting portion 49 of the elongate member 37 with the bracket 39. In the first embodiment shown in figure 2, the bracket has a first mounting section 59 and a second mounting section 61 arranged essentially parallel to each other in an 8-configuration (see Fig. 3). The first mounting section 59 in form of a mounting lug is coupled to the first mounting portion 49 of the elongate member 37 and the second mounting section 61 is coupled to the pump unit 1 via a bolt 63 of the flange connection 9 between the motor housing 5 and the casing 3.

The partially exploded view in figure 3 gives a better view on the individual parts of the mounting system 33. The bottom screw 57 extends through the first mounting section 59 of the bracket 39 and the spacer sleeve 55 into the first mounting portion 49 of the elongate member 37. The spacer sleeve 55 defines a distance between the bottom housing lug 43 of the housing 31 and the bracket 39. A spring 65 within the spacer sleeve 55 separates the elongate member 37 from the bracket 39. The elongate member 37 is thus spring-mounted on the bracket 39 to compensate production tolerances and to dampen the transfer vibrations from the pump unit 1 to the housing 31. The bolt 63 of the flange connection 9 is part of a nut-and-bolt fastener comprising washers 67 and a nut 69. The length of the bolt 67 allows accommodating the second mounting section 61 of the bracket 39 for coupling the bracket to the pump unit 1.

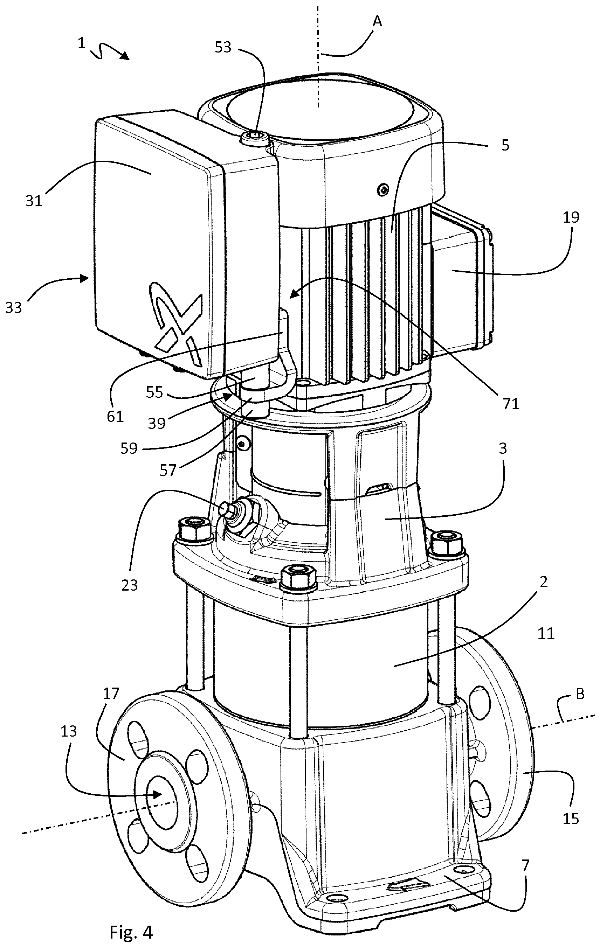

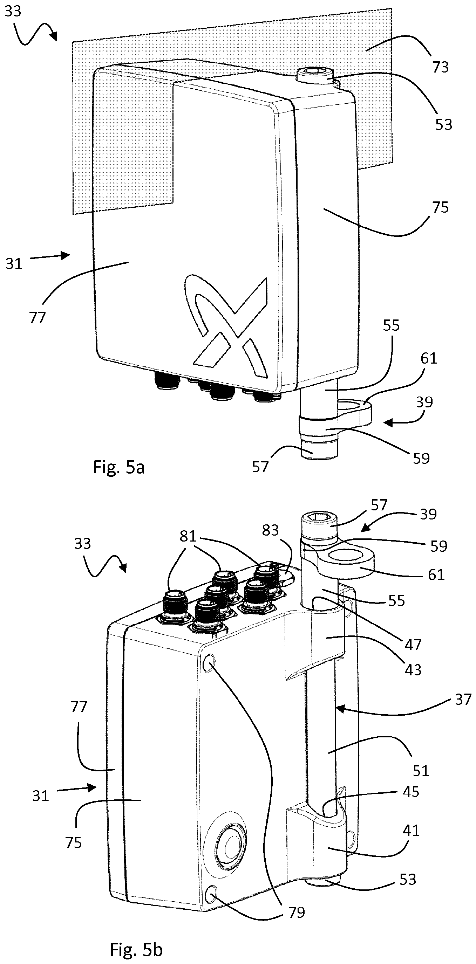

Fig. 4 shows a second embodiment of the present disclosure, in which a bracket 39 is mounted laterally on the motor housing 5. The first mounting section 59 of the bracket 39 is essentially perpendicular to the second mounting section 61 of the bracket 39. The motor housing 5 comprises a lateral installation section 71 at the same lateral side where the outlet port 13 is located. The lateral installation section 71 of the motor housing 5 comprises threads (not shown) for receiving screws in case the pump unit 1 is installed in a horizontal operating position. As these threads are not used in the shown vertical operating position of the pump unit1, they are used to couple the second mounting section 61 of the bracket 39 to the pump unit 1. In this embodiment, a center plane 73 (see Fig. 5a), defined as a symmetry plane of the smallest virtual box shape space envelope into which the housing 31 fits, is essentially coaxial with a plane spanned by the rotor axis A and the pipe axis B. This keeps the overall installation space envelope of the pump unit 1 including the mounted monitoring unit 29 at a minimum. During mounting of the monitoring unit 29 by the mounting system 33 the housing 31 is rotatable around the longitudinal axis of the elongate member 37. Thereby, bracket lugs of the second mounting section 61 of the bracket 39 are accessible for fastening the bracket 39 to the motor housing 5. The housing 31 can be fixed against rotation by tightening the top screw 53 and/or the bottom screw 57.

The two perspective views of figures 5a and 5b show the mounting system 33 in more detail. The housing 31 is mainly comprised of a housing body 75 and a front lid 77. The front lid 77 closes the housing body 75 by way of housing screws in defined screw channels 79 located in the corners of the housing 31. The front lid 77 seals the housing body 75 in a waterproof manner. At the bottom side of housing 31, as shown in figure 5a (corresponding to the top side of the housing 31 as shown in figure 5b), six input ports 81 in form of M12 coaxial cable connectors protrude though the wall of the housing 31. In addition, a power connection 83 is provided at the same side of the housing 31.

The essentially box-like shape of the housing 31 defines a center plane 73. The longitudinal axis of the elongate member 37 is both parallel and offset with respect to the center plane 73. In case the housing 31 does not have an essentially box like shape, the center plane may be defined as a symmetry plane of the smallest virtual box shape space envelope into which it fits. This gives the installing person more flexibility for mounting the housing 31 to the pump unit 1.

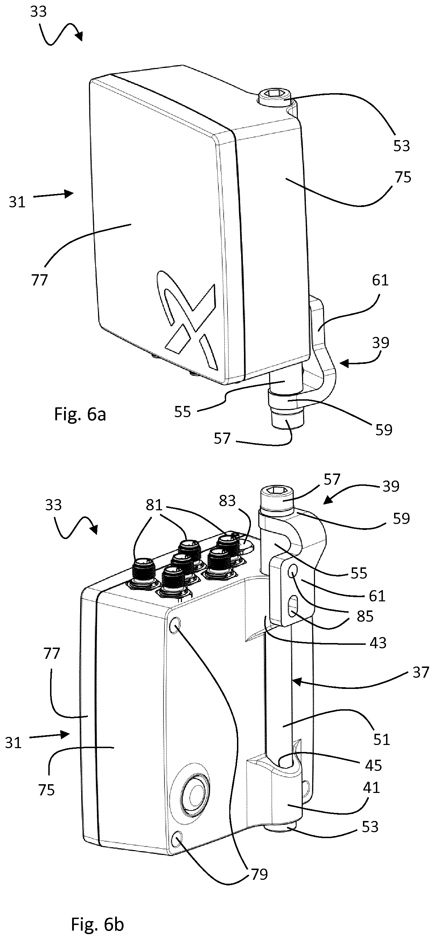

Figure 6a and 6b show the second embodiment of the mounting system 33 with an angled bracket 39 having the first mounting section 59 perpendicular to the second mounting section 61. The second mounting section 61 of the bracket 39 may comprise one or more openings 85 for the coupling to the pump unit 1. One or more of the openings 85 may be oval or elongate to allow a coupling to a variety of pumps with different lateral installation sections in which the corresponding threads have a different size and/or distance to each other.

The exploded view of figure 7 shows in particular how the monitoring unit 29 is confined within an inner volume defined by the housing 31. In this shown example, an antenna 87 is located at the outer periphery of the monitoring unit 29 as part of the monitoring unit 29. Alternatively, the antenna 87 can be at least partially part of the housing 31. The antenna 87 may be used for wireless communication with a remote receiving station (not shown). Alternatively, the monitoring unit 29 may comprise output ports for wired communication with an external device. For instance, the input ports 81 may selectively be used as output ports.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. While at least one exemplary embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

In addition, "comprising" does not exclude other elements or steps, and "a" or "one" does not exclude a plural number. Furthermore, characteristics or steps which have been described with reference to one of the above exemplary embodiments may also be used in combination with other characteristics or steps of other exemplary embodiments described above. Method steps may be applied in any order or in parallel or may constitute a part or a more detailed version of another method step. It should be understood that there should be embodied within the scope of the patent warranted hereon all such modifications as reasonably and properly come within the scope of the contribution to the art. Such modifications, substitutions and alternatives can be made without departing from the spirit and scope of the disclosure, which should be determined from the appended claims and their legal equivalents.

## Claims

1. A mounting system (33) for mounting a monitoring unit (29) on a pump unit (1) for monitoring at least one operational parameter of the pump unit (1), wherein said mounting system (33) comprises
- a housing (31) for accommodating the monitoring unit (33), wherein the monitoring unit (29) is configured to receive at least one operational parameter from a pump sensor (21, 23),
- an elongate member (37) and
- a bracket (39),
wherein the elongate member (37) comprises a first mounting portion (49) and a second mounting portion (51),
wherein the bracket (39) is mounted on the first mounting portion (49) of the elongate member (37) for the bracket (39) to be coupled to the pump unit (1),
wherein the housing (31) is mounted on the second mounting portion (51) of the elongate member (37) holding the housing (31) in a defined position distanced from the pump unit (1).

2. The mounting system (33) according to claim 1, wherein the housing (31) is manually rotatable around a longitudinal axis of the elongate member (37) from a first rotational position to a second rotational position.

3. The mounting system (33) according to claim 1 or 2, wherein the bracket (39) is mounted on the first mounting portion (49) of the elongate member (37) in such a way that a longitudinal axis of the elongate member (37) is parallel to a rotor axis (A) of the pump unit (1).

4. The mounting system (33) according to any of the preceding claims, wherein the housing (31) is waterproof to protect the monitoring unit (29) and comprises at least one input port (81) for receiving at least one operational parameter from a pump sensor (21, 23).

5. The mounting system (33) according to any of the preceding claims, wherein the elongate member (37) has a higher stiffness than the housing (31).

6. The mounting system (33) according to any of the preceding claims, wherein the bracket (39) has a first mounting section (59) and a second mounting section (61), wherein the first mounting section (59) is coupled to the first mounting portion (49) of the elongate member (37), wherein the second mounting section (61) is to be coupled to the pump unit (1), wherein the first mounting section (59) and the second mounting section (61) are essentially parallel or essentially orthogonal to each other.

7. The mounting system (33) according to any of the preceding claims, wherein the first mounting portion (49) of the elongate member (37) is located at a first axial end of the elongate member (37) and the second mounting portion (51) of the elongate member (37) extends from the first mounting portion (49) to a second axial end of the elongate member (51).

8. The mounting system (33) according to any of the preceding claims, wherein the outer shape of the housing (31) defines a centre plane (73), wherein a longitudinal axis of the elongate member (37) is both parallel and offset with respect to the centre plane (73).

9. The mounting system (33) according to any of the preceding claims, wherein the elongate member (37) is spring mounted on the bracket (39).

10. The mounting system (33) according to any of the preceding claims, wherein the housing (31) comprises plastic.

11. The mounting system (33) according to any of the preceding claims, wherein the elongate member (37) and/or the bracket (39) comprise metal.

12. The mounting system (33) according to any of the preceding claims, wherein the housing (31) comprises a first opening (45) and a second opening (47), wherein the second mounting portion (51) of the elongate member (37) is inserted through the first opening (45) and the second opening (47).

13. The mounting system (33) according to claim 12, wherein the first opening (45) and the second opening (47) are essentially arranged coaxially, wherein the second mounting portion (51) of the elongate member (37) is inserted through the first opening (45) and the second opening (47), wherein the housing (31) is fixed in axial direction relative to the second mounting portion (51) of the elongate member (37) by an abutment face at an end of the second mounting portion (51) of the elongate member (37), wherein the abutment face abuts axially against the second opening (47) of the housing (31).

14. The mounting system (33) according to claim 12 or 13, wherein a longitudinal axis of the elongate member (37) is essentially vertical.

15. The mounting system (33) according to any of the claims 12 to 14, wherein the first opening (45) is located near a first side of the housing (31) and the second opening (47) is located near a second side of the housing (31), wherein the first side and the second are opposing sides of the housing (31).

16. The mounting system (33) according to any of the claims 12 to 15, wherein the housing (31) comprises at least one housing lug (41, 43) laterally projecting from the housing (31) and defining the first opening (45) and the second opening (47).

17. The mounting system (33) according to any of the claims 12 to 16, wherein the first and/or the second openings (45, 47) may comprise at least one radially inward projection, wherein the at least one radial inward projection is at least partially more resilient than the second mounting portion (51) of the elongate member (37).

18. The mounting system (33) according to any of the preceding claims, wherein, the housing (31) defines an inner volume for accommodating the monitoring unit (29), wherein the elongate member (37) is located outside of the inner volume.

19. The mounting system (33) according to any of the preceding claims, further comprising an antenna (87) confined inside the housing (31), wherein the antenna (87) is connectable to the monitoring unit (29).

20. A pump assembly comprising a
- a pump unit (1),
- a monitoring unit (29),
- at least one pump sensor (21, 23), and
- a mounting system (33) according to any of the preceding claims, wherein the monitoring unit (29) is configured to receive at least one operational parameter from the at least one pump sensor (21, 23),
wherein the bracket (39) of the mounting system (33) is coupled to the pump unit (1), and
wherein the monitoring unit (29) is located in the housing (31) of the mounting system (33).

21. The pump assembly according to claim 20, wherein the pump unit (1) is a multistage centrifugal pump with a vertical or horizontal rotor axis (A).

22. The pump assembly according to claim 20 or 21, further comprising an antenna (87) connected to the monitoring unit (29), wherein the antenna (87) is confined within the housing (31) of the mounting system (33).
